# EUROPEAN PATENT APPLICATION

(11) **EP 4 825 164 A1**
(43) Date of publication of application: **21.10.2026**
(21) Application number: 24903277.2
(22) Date of filing: 20.09.2024
(51) Int. Cl.: A01K 29/00, A01K 5/02

(54) **DEVICE, METHOD, AND PROGRAM**

(30) Priority: 13.12.2023 JP 2023210263
(71) Applicant: Yokogawa Electric Corporation, Musashino-shi, Tokyo 180-8750 (JP)
(72) Inventor: OGAWA, Kotaro, Musashino-shi, Tokyo 180-8750 (JP); YAMASHITA, Hirotaka, Musashino-shi, Tokyo 180-8750 (JP); OISHI, Kenji, Musashino-shi, Tokyo 180-8750 (JP); NAKAMURA, Ryosuke, Musashino-shi, Tokyo 180-8750 (JP)
(74) Representative: Hoffmann Eitle
(86) International application number: PCT/JP2024/033700
(87) International publication number: WO 2025/126614

(57) **Abstract**

Provided is an apparatus comprising an image acquisition unit that acquires an image of livestock, an index value acquisition unit that acquires, based on the image, at least one state index value indicating a state of the livestock, a determination unit that determines, based on the at least one state index value, feeding content for the livestock, and a control unit that controls, in accordance with the feeding content, a feeding apparatus that feeds the livestock, wherein the feeding apparatus includes a feed discharge apparatus that discharges feed, and the determination unit determines, based on the at least one state index value, a feeding amount by the feed discharge apparatus.

## Description

### TECHNICAL FIELD

The present invention relates to an apparatus, a method, and a program.

### BACKGROUND ART

Patent Documents 1 to 5 describe, for example, "An apparatus for determining a body condition score of an animal (50), comprising: - the three-dimensional camera system (51) directed toward the animal and provided for recording at least one three-dimensional image of the animal; and - the image processing device (52) connected to the three-dimensional camera system (51) and provided for forming a three-dimensional surface representation of a part of the animal from the three-dimensional image recorded by the three-dimensional camera system (51), statistically analyzing a surface of the three-dimensional surface representation, and determining the body condition score of the animal based on the statistically analyzed surface of the three-dimensional surface representation ..." (claim 1 of Patent Document 1), and the like.

### RELATED ART DOCUMENTS

### PATENT DOCUMENTS

Patent Document 1: Japanese Patent No. 5519693
Patent Document 2: Japanese Patent Application Publication No. 2015-173732
Patent Document 3: Japanese Patent Application Publication No. 2016-59300
Patent Document 4: Japanese Patent Application Publication No. 2019-187277
Patent Document 5: Japanese Patent No. 6777948

### GENERAL DISCLOSURE

In a first aspect of the present invention, there is provided an apparatus including an image acquisition unit that acquires an image of livestock, an index value acquisition unit that acquires, based on the image, at least one state index value indicating a state of the livestock, a determination unit that determines, based on the at least one state index value, feeding content for the livestock, and a control unit that controls, in accordance with the feeding content, a feeding apparatus that feeds the livestock.

In the above apparatus, the feeding apparatus may include a feed discharge apparatus that discharges feed, and the determination unit may determine, based on the at least one state index value, a feeding amount by the feed discharge apparatus.

In the above apparatus that determines a feeding amount, the apparatus may further include an identification unit that identifies, among a plurality of livestock collectively raised, livestock that is at a position to eat feed discharged by the feed discharge apparatus, the image acquisition unit may acquire images of the respective ones of the plurality of livestock, the index value acquisition unit may acquire the at least one state index value for each livestock from an image of each livestock, and the determination unit may determine a feeding amount for livestock identified by the identification unit among the plurality of livestock. The identification unit may perform image recognition on the image supplied from the image acquisition unit to identify the livestock that is a subject. When the tag indicating individual identification information of livestock is attached to the livestock, the identification unit may identify the livestock by performing image analysis on the individual identification information indicated on the tag. The individual identification information indicated on the tag may be encoded into the two-dimensional code. The tag may be the RFID tag that holds individual identification information in a readable manner.

In any of the above-described apparatuses that determine the feeding amount, the determination unit may determine feeding amounts of roughage and concentrated feed, respectively.

In the above-described apparatus that determines feeding amounts of each of roughage and concentrated feed, the at least one state index value may include a body condition score BCS and a rumen fill score RFS, and the determination unit may decrease a feeding amount of concentrated feed in response to an average score BCS_{Ave/week} of BCS in one week, a rate of change ΔBCS_{Ave/week} of BCS_{Ave/week}, a first threshold BCS_{Th1} of BCS, an RFS at an arbitrary time, and a threshold RFS_{Th} of RFS satisfying BCS_{Ave/week}>BCS_{Th1} and ΔBCS_{Ave/week}>0 and RFS_{Th}<RFS. Decreasing the feeding amount may be decreasing the feeding amount relative to a reference, and the reference may be a previous feeding amount or may be a preset feeding amount.

In any of the above-described apparatuses that determine feeding amounts of each of roughage and concentrated feed, the at least one state index value may include a body condition score BCS and a rumen fill score RFS, and the determination unit may decrease a feeding amount of concentrated feed and increase a feeding amount of roughage in response to an average score BCS_{Ave/week} of BCS in one week, a rate of change ΔBCS_{Ave/week} of BCS_{Ave/week}, a first threshold BCS_{Th1} of BCS, an RFS at an arbitrary time, and a threshold RFS_{Th} of RFS satisfying BCS_{Ave/week}>BCS_{Th1} and ΔBCS_{Ave/week}>0 and RFS_{Th}≥RFS. Increasing the feeding amount may be increasing the feeding amount relative to the reference, and the reference may be the previous feeding amount or may be a preset feeding amount.

In any of the above-described apparatuses that determine feeding amounts of each of roughage and concentrated feed, the at least one state index value may include a body condition score BCS and a rumen fill score RFS, and the determination unit may increase a feeding amount of concentrated feed and decrease a feeding amount of roughage in response to an average score BCS_{Ave/week} of BCS in one week, a rate of change ΔBCS_{Ave/week} of BCS_{Ave/week}, a second threshold BCS_{Th2} of BCS, an RFS at an arbitrary time, and a threshold RFS_{Th} of RFS satisfying BCS_{Ave/week}<BCS_{Th2} and ΔBCS_{Ave/week}<0 and RFS_{Th}<RFS.

In any of the above-described apparatuses that determine feeding amounts of each of roughage and concentrated feed, the at least one state index value may include a body condition score BCS and a rumen fill score RFS, and the determination unit may increase a feeding amount of roughage in response to an average score BCS_{Ave/week} of BCS in one week, a rate of change ΔBCS_{Ave/week} of BCS_{Ave/week}, a second threshold BCS_{Th2} of BCS, an RFS at an arbitrary time, and a threshold RFS_{Th} of RFS satisfying BCS_{Ave/week}<BCS_{Th2} and ΔBCS_{Ave/week}<0 and RFS_{Th}≥RFS.

In any of the above-described apparatuses that determine a feeding amount, the feed discharge apparatus may include a feed discharge unit that discharges feed in a vicinity of a fence surrounding the livestock, a moving unit that moves the feed discharge unit along the fence, and an imaging unit that is moved integrally with the feed discharge unit by the moving unit and captures an image of livestock that is at a position to eat feed discharged by the feed discharge unit, and the image acquisition unit may acquire an image from the imaging unit.

In any of the above-described apparatuses, the feeding apparatus may include a feed pushing apparatus that pushes leftover feed so as to bring the leftover feed closer to the livestock, and the determination unit may determine whether or not to execute feed pushing for the livestock based on at least some of the at least one state index value.

In the above-described apparatus that determines whether or not to execute feed pushing, the at least one state index value may include a rumen fill score RFS, and the determination unit may determine to execute feed pushing for the livestock in response to RFS and a threshold RFS_{Th} of RFS satisfying RFS_{Th}>RFS.

In any of the above-described apparatuses that determine whether or not to perform feed pushing, the apparatus may further include an identification unit that identifies, among a plurality of livestock collectively raised, livestock that is at a position to eat feed pushed by the feed pushing apparatus, the image acquisition unit may acquire images of the respective ones of the plurality of livestock, the index value acquisition unit may acquire the at least one state index value for each livestock from an image of each livestock, and the determination unit may determine whether or not to execute feed pushing for livestock identified by the identification unit among the plurality of livestock.

In the above-described apparatus, the at least one state index value may include a rumen fill score (RFS), and the determination unit may determine to execute feed pushing for the livestock in response to the livestock identified by the identification unit indicating a minimum value RFS_{min/group} of RFS among the plurality of livestock and the RFS_{min/group} satisfying, with respect to a maximum value RFS_{max/group} of RFS among the plurality of livestock, RFS_{max/group}-RFS_{min/group}>1.

In any of the above-described apparatuses that determine whether or not to execute feed pushing, the feed pushing apparatus may include a feed pushing unit that pushes leftover feed so as to bring the leftover feed closer to a fence surrounding the livestock, a moving unit that moves the feed pushing unit along the fence, and an imaging unit that is moved integrally with the feed pushing unit by the moving unit and captures an image of livestock that is at a position where feed pushing is performed by the feed pushing unit, and the image acquisition unit may acquire an image from the imaging unit.

In any of the above-described apparatuses, the index value acquisition unit may acquire the at least one state index value by supplying an image acquired by the image acquisition unit to a model that outputs, in response to an image of livestock being input, the at least one state index value for livestock in the image. The model may analyze an image of livestock to detect feature points of a skeleton and a body surface, and may calculate a state index value from a feature quantity calculated from a positional relationship of the feature points. The feature quantity may be the distance between a feature point of the skeleton and a feature point of the body surface, may be a sum total of distances between feature points, or may be a difference or a ratio between the area of a region surrounded by a plurality of feature points of the skeleton and the area of a region surrounded by a plurality of feature points of the body surface. The model may move or crop an image such that any feature point of livestock becomes the center in the image.

In a second aspect of the present invention, there is provided a method including: acquiring an image of livestock; acquiring an index value by acquiring, based on the image, at least one state index value indicating a state of the livestock; determining, based on the at least one state index value, feeding content for the livestock; and controlling, in accordance with the feeding content, a feeding apparatus that feeds the livestock.

In a third aspect of the present invention, there is provided a program for causing a computer to function as: an image acquisition unit that acquires an image of livestock; an index value acquisition unit that acquires, based on the image, at least one state index value indicating a state of the livestock; a determination unit that determines, based on the at least one state index value, feeding content for the livestock; and a control unit that controls, in accordance with the feeding content, a feeding apparatus that feeds the livestock.

Note that the above summary of the invention does not enumerate all necessary features of the present invention. Also, sub-combinations of these groups of features can also constitute the invention.

### BRIEF DESCRIPTION OF THE DRAWINGS

FIG. 1 is a diagram illustrating a system 1 according to an embodiment.
FIG. 2 is a diagram illustrating a control apparatus 3 and a feed discharge apparatus 21.
FIG. 3 is a diagram illustrating feature points of livestock.
FIG. 4 is a diagram illustrating operations of the control apparatus 3.
FIG. 5 is a diagram illustrating an example of the computer 2200 in which a plurality of aspects of the present invention may be embodied in whole or in part.

### DESCRIPTION OF EMBODIMENTS

Hereinafter, the present invention will be described through embodiments of the invention; however, the following embodiments do not limit the invention according to the claims. In addition, not all combinations of features described in the embodiments are necessarily essential to the means for solving the invention.

### <1. System 1>

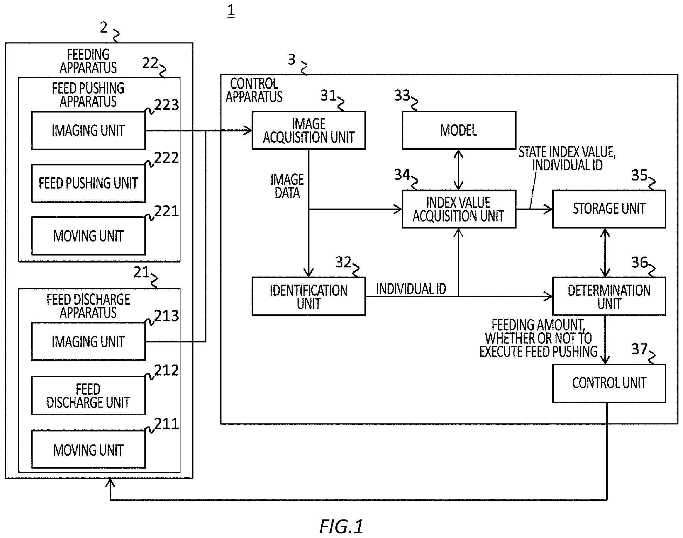

FIG. 1 is a diagram illustrating the system 1 according to the present embodiment. The system 1 manages feeding for one or a plurality of livestock, and includes the feeding apparatus 2 and the control apparatus 3.

Note that the livestock may be a farm animal (for example, a working animal or a draft animal) or may be a pet animal. The animal may be a mammal, may be a bird, or may be a fish. In the present embodiment, as an example, the livestock may be the cattle. The livestock may be collectively raised (also referred to as multiple-head raising or group raising) within a common region surrounded by the fence, and a plurality of livestock within the fence may be free-range. Within the fence, a plurality of positions (also referred to as feed intake positions) that the livestock occupy when eating feed may be provided, and an opening may be provided in the fence at the feed intake position so that the livestock within the fence can put their heads out and eat feed outside the fence. Each feed intake position may be partitioned so as to accommodate only the single livestock.

### <1.1. Feeding Apparatus 2>

The feeding apparatus 2 performs feeding for one or a plurality of the livestock. The feeding apparatus 2 includes the feed discharge apparatus 21 and the feed pushing apparatus 22.

### <1.1.1. Feed Discharge Apparatus 21>

The feed discharge apparatus 21 discharges feed for the livestock. The feed discharge apparatus 21 includes the moving unit 211, the feed discharge unit 212, and the imaging unit 213. Each unit of the feed discharge apparatus 21 may be controlled by the control apparatus 3.

### <1.1.1(1). Moving Unit 211>

The moving unit 211 moves the feed discharge unit 212 along the fence surrounding livestock. The moving unit 211 may move the feed discharge unit 212 along the fence on the preset route. As an example, the moving unit 211 may carry the feed discharge unit 212, and may move the feed discharge unit 212 by traveling on the rail installed along the fence.

### <1.1.1(2). Feed Discharge Unit 212>

The feed discharge unit 212 discharges feed in the vicinity of the fence surrounding livestock. In the present embodiment, as an example, the feed discharge unit 212 may discharge feed to the feeding position outside the fence. The feeding position may be a position at which feed is provided to livestock at the feed intake position, and may be a position facing the feed intake position with the fence interposed therebetween. The feed discharge unit 212 may accumulate feed therein, and may discharge feed to the feeding position in response to the feed discharge unit 212 being moved to the feeding position by the moving unit 211.

### <1.1.1(3). Imaging Unit 213>

The imaging unit 213 captures an image of livestock at the feed intake position (in the present embodiment, as an example, a facing position of the feeding position) of feed discharged by the feed discharge unit 212. The imaging unit 213 may capture an image of at least one of the side surface (as an example, the left side surface) or an upper surface (back surface) of the livestock. The imaging unit 213 may move integrally with the feed discharge unit 212 by the moving unit 211, and may perform imaging in response to the imaging unit 213 being moved to the feeding position or the vicinity thereof by the moving unit 211.

The imaging unit 213 may capture the monochrome image, or may capture the color image. The imaging unit 213 may include the ranging sensor (also referred to as the depth sensor), and may capture a two-dimensional image including depth information to a subject, or may capture a three-dimensional image. The imaging unit 213 may capture a plurality of still images at each reference interval, or may capture a moving image including a plurality of frames over a reference period. The imaging unit 213 may supply the captured image to the control apparatus 3.

### <1.1.2. Feed Pushing Apparatus 22>

The feed pushing apparatus 22 pushes leftover feed so as to bring the leftover feed closer to livestock. The feed pushing apparatus 22 may cause livestock to eat again by pushing, to the feeding position, feed outside the fence that is left over after feeding by the feed discharge apparatus 21. The feed pushing apparatus 22 includes the moving unit 221, the feed pushing unit 222, and the imaging unit 223. Each unit of the feed pushing apparatus 22 may be controlled by the control apparatus 3.

### <1.1.2(1). Moving Unit 221>

The moving unit 221 moves the feed pushing unit 222 along the fence. The moving unit 221 may move the feed pushing unit 222 on the preset route. For example, the moving unit 221 may be equipped with the feed pushing unit 222, and may move the feed pushing unit 222 by self-propelling on the route identified by a plurality of markers installed in advance on a floor or a fence along the route. The markers may be magnets, or may be the communicators that emit signals (e.g., transponders).

### <1.1.2(2). Feed Pushing Unit 222>

The feed pushing unit 222 pushes leftover feed so as to bring the leftover feed closer to the fence surrounding livestock. In the present embodiment, as an example, the feed pushing unit 222 may push feed to the feeding position. The feed pushing unit 222 may execute feed pushing by moving feed scattered on the floor so as to bring the feed closer to the fence using the blade (also referred to as a spatula), the brush, an air brush, or the like. The feed pushing unit 222 may perform feed pushing by being moved by the moving unit 221, and, when feed pushing is not performed, the feed pushing unit 222 may not move feed on the floor by raising the blade or the brush, or the like.

### <1.1.2(3). Imaging Unit 223>

The imaging unit 223 captures an image of livestock located at the feed intake position of feed pushed by the feed pushing unit 222 (in the present embodiment, as an example, a facing position of the feeding position). The imaging unit 223 may move integrally with the feed pushing unit 222 by the moving unit 221, and may perform imaging in response to the imaging unit 223 having moved to the feeding position or the vicinity thereof by the moving unit 221, and may supply the captured image to the control apparatus 3. The imaging unit 223 may be provided similarly to the imaging unit 213 of the feed discharge apparatus 21.

### <1.2. Control Apparatus 3>

The control apparatus 3 is an example of the apparatus, and includes an image acquisition unit 31, an identification unit 32, a model 33, an index value acquisition unit 34, a storage unit 35, a determination unit 36, and a control unit 37.

### <1.2.1. Image Acquisition Unit 31>

The image acquisition unit 31 acquires an image of livestock. The image acquisition unit 31 may acquire images from the imaging unit 213 of the feed discharge apparatus 21 and the imaging unit 223 of the feed pushing apparatus 22. The image acquisition unit 31 may acquire images of the respective ones of the plurality of livestock collectively raised within the fence. The image acquisition unit 31 may supply the acquired images to the identification unit 32 and the index value acquisition unit 34.

### <1.2.2. Identification Unit 32>

The identification unit 32 identifies, among a plurality of livestock collectively raised in a fence, livestock located at the feed intake position. The identification unit 32 may perform image recognition on an image supplied from the image acquisition unit 31 to identify the livestock that is a subject. As an example, the identification unit 32 may identify, among livestock in the fence, livestock that is a subject based on a nose print or a body pattern of cattle that are livestock. When the tag indicating individual identification information (also referred to as the individual ID) of livestock is attached to livestock, the identification unit 32 may identify the livestock by performing image analysis on the individual ID indicated on the tag. The individual ID indicated on the tag may be encoded into the two-dimensional code. The identification unit 32 may supply the identified individual ID to the index value acquisition unit 34 and the determination unit 36.

### <1.2.3. Model 33>

The model 33 outputs, in response to an input of the image of the livestock, at least one state index value regarding livestock in the image.

The at least one state index value may include, for example, the body condition score (BCS) and the rumen fill score (RFS). The BCS may be a value obtained by quantifying a degree of fleshiness and fat accumulation, and may be, as an example, a value within the range of 1 to 5. The RFS may be a value obtained by quantifying a feed intake amount and a degree of fullness of the first stomach (also referred to as a rumen), and may be, as an example, a value within the range of 1 to 5.

The model 33 may analyze an image of the livestock to detect feature points of a skeleton and a body surface, and may calculate a state index value from a feature quantity calculated from a positional relationship of the feature points. The feature quantity may be the distance between a feature point of the skeleton and a feature point of the body surface, may be a sum total of distances between the feature points, or may be a difference or a ratio between the area of a region surrounded by a plurality of feature points of the skeleton and the area of a region surrounded by a plurality of feature points of the body surface. In a case where depth information to a subject is included in data of the image, the model 33 may calculate the feature quantity by using the actual size of the livestock calculated by using the depth information and the size of the livestock in the image. The model 33 may calculate the feature quantity by scaling the image based on the depth information. The model 33 may move or crop the image such that any feature point of the livestock becomes the center in the image. The model 33 may detect the feature points in the image by learning processing using the learning algorithm such as deep learning. The model 33 may calculate each state index value from the feature quantity by using the regression equation (also referred to as the regression model) obtained by performing regression analysis on a relationship between the feature quantity and each state index value.

### <1.2.4. Index Value Acquisition Unit 34>

The index value acquisition unit 34 acquires at least one state index value indicating a state of livestock based on the image. The index value acquisition unit 34 may acquire, for each livestock, at least one state index value from the image of each livestock. The index value acquisition unit 34 may supply the image acquired by the image acquisition unit 31 to the model 33 and acquire at least one state index value output from the model 33. The index value acquisition unit 34 may supply, to the storage unit 35, each state index value acquired for livestock in the image in association with the individual ID supplied from the identification unit 32 for the livestock.

### <1.2.5. Storage Unit 35>

The storage unit 35 stores the state index value for each livestock. The storage unit 35 may cumulatively store each state index value in association with the individual ID. The state index value stored in the storage unit 35 may be displayed on the display apparatus (not illustrated) in accordance with an operation from an operator.

### <1.2.6. Determination Unit 36>

The determination unit 36 determines feeding contents for livestock based on at least one state index value (in the present embodiment, as an example, BCS or RFS). The determination unit 36 may determine feeding contents for each livestock, and may determine feeding contents for livestock identified by the identification unit 32, that is, livestock at the feed intake position. The determination unit 36 may determine feeding contents based on the state index values stored in the storage unit 35. In the present embodiment, as an example, the determination unit 36 may determine feeding contents for livestock of the individual ID based on each state index value stored in the storage unit 35 in association with the individual ID supplied from the identification unit 32.

The determination unit 36 may determine the feeding amount by the feed discharge apparatus 21 based on at least one state index value, and may determine the feeding amount for livestock identified by the identification unit 32 among the plurality of livestock, that is, livestock at the feed intake position.

The determination unit 36 may determine whether or not to execute feed pushing for livestock based on at least some of at least one state index value, and may determine whether or not to execute feed pushing for livestock identified by the identification unit 32 among the plurality of livestock, that is, livestock at the feed intake position. In the present embodiment, as an example, the determination unit 36 may determine whether or not to execute feed pushing based on the RFS among the BCS or the RFS acquired by the index value acquisition unit 34.

The determination unit 36 may supply the determined feeding contents (in the present embodiment, as an example, the feeding amount and whether or not to execute feed pushing) to the control unit 37.

### <1.2.7. Control Unit 37>

The control unit 37 controls the feeding apparatus 2 in accordance with the feeding contents determined by the determination unit 36. The control unit 37 may cause feed to be discharged from the feed discharge apparatus 21 by the feeding amount determined by the determination unit 36. The control unit 37 may cause the feed pushing apparatus 22 to execute feed pushing in accordance with the determination, by the determination unit 36, as to whether or not to execute feed pushing.

According to the control apparatus 3 described above, the plurality of state index values of livestock are acquired based on the acquired images, and the feeding apparatus 2 is controlled in accordance with feeding content determined based on the at least one state index value. Therefore, by supplying the image of livestock, it is possible to automatically cause feeding to be performed with appropriate feeding content for the livestock.

Further, since the feeding amount by the feed discharge apparatus 21 is determined based on at least one state index value, it is possible to automatically cause feeding to be performed with the appropriate feeding amount.

Further, among a plurality of livestock that are collectively raised, livestock at the feed intake position is identified, and the feeding amount for the identified livestock is determined. Therefore, it is possible to determine the feeding amount individually for each livestock that is collectively raised and execute feeding.

Further, since the image of livestock is acquired from the imaging unit 213 that moves integrally with the feed discharge unit 212 of the feed discharge apparatus 21, the image of livestock can be acquired by moving the feed discharge unit 212. Therefore, it is possible to save the trouble of moving livestock to the imaging region in order to image the livestock.

Further, since whether or not to execute feed pushing is determined based on at least one state index value, it is possible to automatically cause appropriate feed pushing to be performed.

In addition, among a plurality of livestock collectively raised, livestock at the feed intake position is identified, and whether or not to perform feed pushing for the identified livestock is determined. Therefore, feed pushing can be performed individually for each livestock collectively raised.

In addition, since an image of livestock is acquired from the imaging unit 223 that moves integrally with the feed pushing unit 222 of the feed pushing apparatus 22, an image of livestock can be acquired by moving the feed pushing unit 222. Therefore, it is possible to save the trouble of moving livestock to the imaging region in order to image the livestock.

In addition, the image acquired by the image acquisition unit 31 is supplied to the model 33 that outputs, in response to an image of livestock being input, at least one state index value for the livestock, and at least one state index value is acquired. Therefore, at least one state index value can be acquired with the simple configuration.

### <2. Control Apparatus 3 and Feed Discharge Apparatus 21>

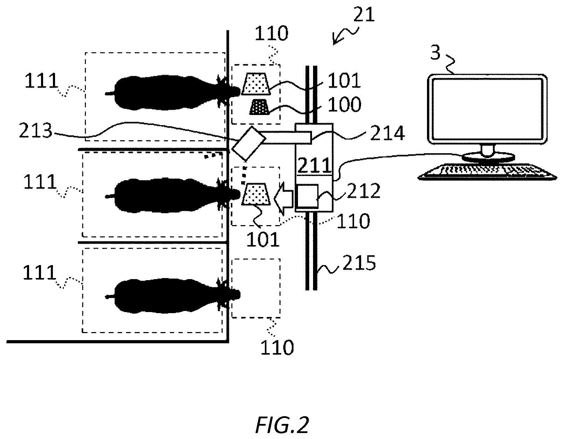

FIG. 2 is a diagram illustrating the control apparatus 3 and the feed discharge apparatus 21. The feed discharge apparatus 21 may include the moving unit 211 that travels on the rail 215, the feed discharge unit 212 that is mounted on the moving unit 211 and discharges at least one of concentrated feed 100 or roughage 101 to the feeding position 110, and the imaging unit 213 that is mounted on the moving unit 211 and images livestock. The roughage 101 may be feed having the high crude fiber content and the low nutrient content, and may be, as an example, pasture grass, wild grass, silage, and straw. The volume per weight of the roughage 101 may be larger than that of the concentrated feed. The concentrated feed 100 may be feed having the low crude fiber content and the high nutrient content, and may be, as an example, cereals, oil cakes, bran and wheat bran, starch residue, brewer's grains, and molasses.

The imaging unit 213 may be provided on the arm 214 protruding from the moving unit 211 so as to image a side surface or an upper surface of the livestock. The control apparatus 3 may acquire, from the imaging unit 213, an image of livestock at the feed intake position 111 facing the feeding position 110 that is a destination to which the feed discharge unit 212 is to move, and may determine respective feeding amounts of the concentrated feed 100 and the roughage 101 for the livestock, and cause the feed discharge unit 212 to discharge the determined amounts of feed.

### <3. Feature Points of Livestock>

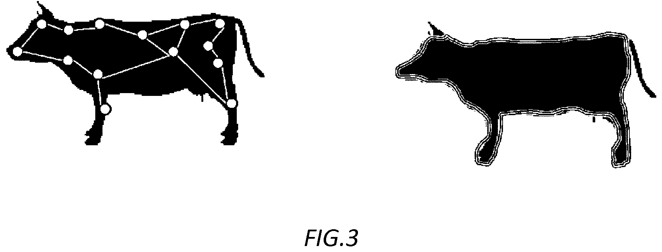

FIG. 3 illustrates feature points of livestock. In the drawing, the left diagram indicates feature points of the skeleton of livestock, and the right diagram indicates feature points of the body surface. In the drawing, the feature points are illustrated as being connected to each other by the white lines. The feature points may be the hip bones, the ischial bones, the tailhead, the withers, and the like. The model 33 may be trained using training data including images in which the operator has annotated positions of feature points. The training data may further include at least one state index value, such as the BSC or the RFS, input by an operator for livestock in the image.

### <4. Operation>

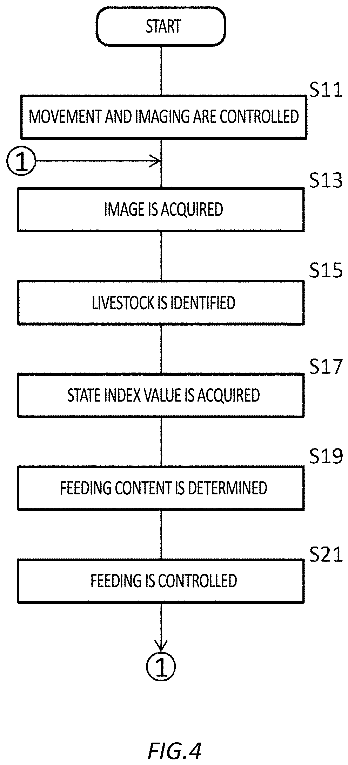

FIG. 4 is a diagram illustrating the operation of the control apparatus 3. The control apparatus 3 manages feeding to livestock by performing processing of steps S11 to S21.

In step S11, the control unit 37 controls the feeding apparatus 2 to cause movement of the feed discharge unit 212 or the feed pushing unit 222 and imaging by the imaging units 213 and 223 to be performed. The control unit 37 may control the moving units 211 and 221 to move the feed discharge unit 212 and the feed pushing unit 222 to the feeding position. Thus, livestock may move to the feed intake position facing the feeding position. The control unit 37 may control the imaging units 213 and 223 to capture an image of the livestock at the feed intake position.

In step S13, the image acquisition unit 31 acquires the image of livestock. The image acquisition unit 31 may acquire an image from the imaging units 213 and 223.

In step S15, the identification unit 32 identifies the livestock present at the feed intake position. The identification unit 32 may identify the livestock that is a subject of the image supplied from the image acquisition unit 31.

In step S17, the index value acquisition unit 34 acquires, based on the image supplied from the image acquisition unit 31, at least one state index value (in the present embodiment, as an example, BCS or RFS) indicating a state of livestock. The index value acquisition unit 34 may supply the image acquired by the image acquisition unit 31 to the model 33 and acquire at least one state index value output from the model 33. The index value acquisition unit 34 may cause the storage unit 35 to store each state index value in association with the individual ID of livestock identified in step S15.

In step S19, the determination unit 36 determines feeding content for livestock based on at least one state index value acquired in step S17.

When the feed discharge apparatus 21 is controlled in step S11 described above, the determination unit 36 may determine respective feeding amounts of roughage and concentrated feed. The determination unit 36 may read out BCS or RFS stored in the storage unit 35 in association with the individual ID of livestock identified in step S15, calculate the average score BCS_{Ave/week} of BCS in one week, the rate of change ΔBCS_{Ave/week} of BCS_{Ave/week}, and RFS at an arbitrary time, and determine a feeding amount. The arbitrary time may be set by the operator. BCS_{Ave/week} and RFS may be moving averages over the most recent one week, and ΔBCS_{Ave/week} may be the most recent rate of change.

The determination unit 36 may reduce a feeding amount of concentrated feed in response to BCS_{Ave/week}, ΔBCS_{Ave/week}, RFS, the first threshold of BCS, BCS_{Th1}, and the threshold RFS_{Th} of RFS, satisfying BCS_{Ave/week}>BCS_{Th1} and ΔBCS_{Ave/week}>0 and RFS_{Th}<RFS. Thus, the feeding amount of concentrated feed is decreased in response to the livestock eating feed well and being in the fattening process. Decreasing the feeding amount may be decreasing the feeding amount relative to the reference, and the reference may be the feeding amount when step S21 described later was performed last time, or may be a preset feeding amount. BCS_{Th}1 may be a threshold for determining whether or not the livestock is fattening, and RFS_{Th} may be a threshold for determining whether or not the livestock is eating feed. BCS_{Th1} and RFS_{Th} may be set to arbitrary values in advance.

The determination unit 36 may reduce the feeding amount of concentrated feed and increase the feeding amount of roughage in response to BCS_{Ave/week}, ΔBCS_{Ave/week}, BCS_{Th1}, RFS, and RFS_{Th} satisfying BCS_{Ave/week}>BCS_{Th1} and ΔBCS_{Ave/week}>0 and RFS_{Th}≥RFS. Thus, in response to the livestock being in the fattening process but not eating much feed, the calorie content of the feed is reduced without reducing the total amount of the feed. Increasing the feeding amount may be increasing the feeding amount relative to the reference, and the reference may be the feeding amount when step S21 described later was performed last time, or may be a preset feeding amount.

The determination unit 36 may increase the feeding amount of concentrated feed and reduce the feeding amount of roughage in response to BCS_{Ave/week}, ΔBCS_{Ave/week}, the second threshold of BCS, BCS_{Th2}, RFS, and RFS_{Th} satisfying BCS_{Ave/week}<BCS_{Th2} and ΔBCS_{Ave/week}<0 and RFS_{Th}<RFS. Thus, the calorie content of the feed is increased in response to the livestock being in the atrophy process but eating feed well. BCS_{Th2} may be a threshold for determining whether or not the livestock is atrophying, and may be smaller than BCS_{Th1}. BCS_{Th2} may be set to an arbitrary value in advance.

The determination unit 36 may increase the feeding amount of roughage in response to BCS_{Ave/week}, ΔBCS_{Ave/week}, BCS_{Th2}, RFS, and RFS_{Th} satisfying BCS_{Ave/week}<BCS_{Th2} and ΔBCS_{Ave/week}<0 and RFS_{Th}≥RFS. Thus, the total amount of the feed is increased in response to the livestock not eating much feed and being in an atrophy process.

In addition, when the feed pushing apparatus 22 is controlled in step S11 described above, the determination unit 36 may read out the latest RFS stored in the storage unit 35 in association with the individual ID of the livestock identified in step S15, and may determine whether or not to execute feed pushing. The determination unit 36 may determine to execute feed pushing for the livestock in response to RFS and RFS_{Th} satisfying RFS_{Th}>RFS. Thus, in response to insufficient feed intake, feed intake opportunities increase.

Alternatively, the determination unit 36 may read out the latest RFS stored in the storage unit 35 in association with the individual ID of each livestock collectively raised within the fence, and may determine whether or not to execute feed pushing. The determination unit 36 may determine to execute feed pushing for the livestock, in response to the livestock identified in step S15 indicating the minimum value RFS_{min/group} of RFS among a plurality of livestock in the fence and the RFS_{min/group} satisfying, with respect to the maximum value RFS_{max/group} of RFS among the plurality of livestock, RFS_{max/group}-RFS_{min/group}>1. Thus, feed pushing is executed for the livestock that is most outcompeted for feed among the livestock that are collectively raised.

In step S21, the control unit 37 controls the feeding apparatus 2 in accordance with the determined feeding content to cause feeding to be performed. The control unit 37 may control the feed discharge unit 212 to discharge feed to the feeding position, and may cause each of concentrated feed and roughage to be discharged in the determined feeding amount. The control unit 37 may control the feed pushing unit 222 to cause feed pushing to be executed with respect to the feeding position. After the processing of step S21 ends, the processing may proceed to step S11. Thus, feeding is performed by the feed discharge apparatus 21 and the feed pushing apparatus 22 moving to each feeding position. The feed discharge apparatus 21 and the feed pushing apparatus 22 may perform feeding at the interval of 6 hours to 8 hours with respect to each feeding position.

According to the above operations, the feeding amounts of roughage and concentrated feed are determined respectively, and therefore the health condition and growth of the livestock can be automatically managed.

Further, the feeding amount of concentrated feed is decreased in response to BCS_{Ave/week}, ΔBCS_{Ave/week}, and RFS satisfying BCS_{Ave/week}>BCS_{Th1} and ΔBCS_{Ave/week}>0 and RFS_{Th}<RFS. Therefore, it is possible to prevent fattening by decreasing the total amount of feed in response to the livestock eating feed well and being in the fattening process.

In addition, the feeding amount of concentrated feed decreases and the feeding amount of roughage increases in response to BCS_{Ave/week}, ΔBCS_{Ave/week}, and RFS satisfying BCS_{Ave/week}>BCS_{Th1} and ΔBCS_{Ave/week}>0 and RFS_{Th}≥RFS. Therefore, it is possible, in response to the livestock being in the fattening process but not eating much feed, to prevent fattening by reducing the calorie content of the feed without reducing the total amount of the feed.

In addition, the feeding amount of concentrated feed increases and the feeding amount of roughage decreases in response to BCS_{Ave/week}, ΔBCS_{Ave/week}, and RFS satisfying BCS_{Ave/week}<BCS_{Th2} and ΔBCS_{Ave/week}<0 and RFS_{Th}<RFS. Therefore, it is possible, in response to the livestock being in the atrophy process but eating feed well, to increase the calorie content of the feed and shift the livestock from the atrophy process to the fattening process.

In addition, the feeding amount of roughage increases in response to BCS_{Ave/week}, ΔBCS_{Ave/week}, and RFS satisfying BCS_{Ave/week}<BCS_{Th2} and ΔBCS_{Ave/week}<0 and RFS_{Th}≥RFS. Therefore, it is possible, in response to the livestock not eating much feed and being in an atrophy process, to prevent atrophy by increasing the total amount of the feed.

In addition, feed pushing is executed in response to RFS satisfying RFS_{Th}>RFS. Therefore, it is possible, in response to insufficient feed intake, to increase feed intake opportunities.

In addition, feed pushing is executed for the livestock in response to the identified livestock indicating the minimum value RFS_{min/group} of RFS and RFS_{max/group}-RFS_{min/group}>1. Therefore, it is possible, in response to feed competition occurring in the group of livestock that are collectively raised, to execute feed pushing for the livestock that is most outcompeted for feed in feeding competition.

### <5. Modification Examples>

In the above embodiment, the control apparatus 3 has been described as including the identification unit 32, the model 33, and the storage unit 35; however, the control apparatus 3 may not include any of these. For example, when livestock are individually raised, the control apparatus 3 may not include the identification unit 32. When the control apparatus 3 does not include the model 33, the model 33 may be stored in an apparatus external to the control apparatus 3.

Further, although the identification unit 32 has been described as identifying livestock by image recognition on the image obtained by imaging the livestock, the livestock may be identified by another method. For example, when the individual ID is held in a readable manner in a tag (e.g., an RFID tag) attached to livestock, the identification unit 32 may read the individual ID from the tag to identify the livestock.

Further, although the image acquisition unit 31 has been described as acquiring an image of livestock from imaging units 213 and 223 of the feed discharge apparatus 21 and the feed pushing apparatus 22, the image acquisition unit 31 may acquire an image of livestock from the imaging apparatus fixed in advance at the feeding position. Further, although the image acquisition unit 31 has been described as acquiring an image obtained by imaging livestock at the feed intake position, as long as the identification unit 32 identifies livestock at the feed intake position, the image acquisition unit 31 may acquire an image captured at another position through which livestock passes or at which livestock stays.

Further, although the imaging units 213 and 223 have been described as performing imaging in response to the feed discharge unit 212 and the feed pushing unit 222 moving to the feeding position or the vicinity thereof, the imaging units 213 and 223 may perform imaging in response to detecting livestock. As an example, the imaging units 213 and 223 may monitor pixel values of respective pixels, and may perform imaging in response to the amount of change in one or more pixel values exceeding a threshold.

Further, although the index value acquisition unit 34 has been described as acquiring BCS or RFS as at least one state index value, the index value acquisition unit 34 may further acquire BCS_{Ave/week}, ΔBCS_{Ave/week}, RFS, and RFS_{max/group}, etc., as state index values. As an example, the index value acquisition unit 34 may read BCS or RFS stored in the storage unit 35 and calculate BCS_{Ave/week}, ΔBCS_{Ave/week}, RFS, and RFS_{max/group}, etc.

Further, although a plurality of livestock have been described as being free-range within the fence, the plurality of livestock may each be tethered at a unique position. In this case, the identification unit 32 may identify the livestock from the position where the livestock is raised.

Further, although the feeding apparatus 2 has been described as including the feed discharge apparatus 21 and the feed pushing apparatus 22, the feeding apparatus 2 may include only one of them.

In addition, various embodiments of the present disclosure may be described with reference to flowcharts and block diagrams, wherein the block may serve as (1) a stage in a process in which an operation is performed, or (2) a section of an apparatus having a role of performing an operation. Certain stages and sections may be implemented by a dedicated circuit, a programmable circuit supplied together with computer-readable instructions stored on computer-readable media, and/or processors supplied together with computer-readable instructions stored on computer-readable media. The dedicated circuit may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element or the like such as a flip-flop, a register, a field programmable gate array (FPGA) and a programmable logic array (PLA), or the like.

A computer-readable medium may include any tangible device that can store instructions to be executed by a suitable device, and as a result, the computer-readable medium having instructions stored thereon includes a product including instructions that can be executed in order to create means for executing operations designated in the flowcharts or block diagrams. Examples of the computer-readable medium may include an electronic storage medium, a magnetic storage medium, an optical storage medium, an electromagnetic storage medium, a semiconductor storage medium, and the like. More specific examples of the computer-readable medium may include a FLOPPY (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disc (DVD), a BLU-RAY (registered trademark) disc, a memory stick, an integrated circuit card, or the like.

The computer-readable instruction may include: an assembler instruction, an instruction-set-architecture (ISA) instruction; a machine instruction; a machine dependent instruction; a microcode; a firmware instruction; state-setting data; or either a source code or an object code described in any combination of one or more programming languages, including an object oriented programming language such as Smalltalk (registered trademark), JAVA (registered trademark), C++, or the like, and a conventional procedural programming language such as a "C" programming language or a similar programming language.

Computer-readable instructions may be provided to a processor of a general-purpose computer, special purpose computer, or other programmable data processing apparatuses, or to a programmable circuit, locally or via a local area network (LAN), wide area network (WAN) such as the Internet, or the like, so that the computer-readable instructions are executed to create means for performing operations specified in the flowcharts or block diagrams. Examples of the processor include a computer processor, a processing unit, a microprocessor, a digital signal processor, a controller, a microcontroller, and the like.

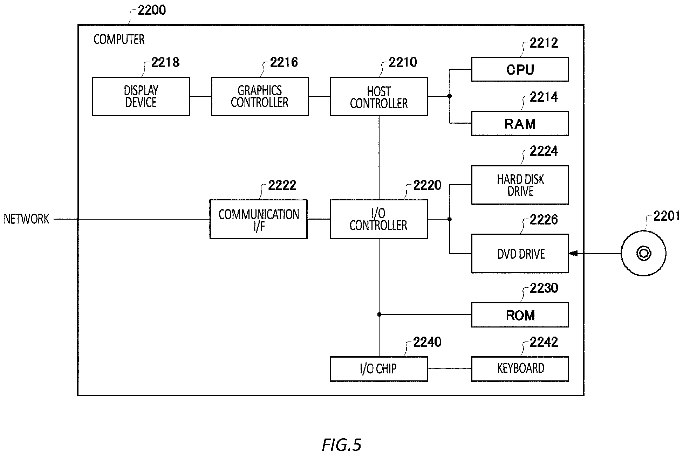

FIG. 5 illustrates an example of a computer 2200 in which a plurality of aspects of the present disclosure may be entirely or partially embodied. A program installed in the computer 2200 can cause the computer 2200 to function as an operation associated with the apparatuses according to the embodiments of the present invention or as one or more sections of the apparatuses, or can cause the operation or the one or more sections to be executed, and/or can cause the computer 2200 to execute a process according to the embodiments of the present invention or a step of the process. Such programs may be executed by a CPU 2212 to cause the computer 2200 to perform specific operations associated with some or all of the blocks in the flowcharts and block diagrams described in the present specification.

The computer 2200 according to the present embodiment includes the CPU 2212, a RAM 2214, a graphics controller 2216, and a display device 2218, which are interconnected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as a ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 acquires image data generated by the CPU 2212 in a frame buffer or the like provided in the RAM 2214 or in itself, such that the image data is displayed on the display device 2218.

The communication interface 2222 communicates with other electronic devices via a network. The hard disk drive 2224 stores programs and data used by the CPU 2212 in the computer 2200. The DVD-ROM drive 2226 reads a program or data from a DVD-ROM 2201 and provides the program or data to the hard disk drive 2224 via the RAM 2214. The IC card drive reads the programs and the data from the IC card, and/or writes the programs and the data to the IC card.

The ROM 2230 stores therein boot programs and the like executed by the computer 2200 at the time of activation, and/or programs that depend on the hardware of the computer 2200. The input/output chip 2240 may also connect various input/output units to the input/output controller 2220 via a parallel port, a serial port, a keyboard port, a mouse port, or the like.

Programs are provided by a computer-readable medium such as the DVD-ROM 2201 or the IC card. The programs are read from the computer-readable medium, are installed in the hard disk drive 2224, the RAM 2214, or the ROM 2230 which is also an example of the computer-readable medium, and are executed by the CPU 2212. The information processing described in these programs is read by the computer 2200, and provides cooperation between the programs and the various types of hardware resources. The apparatus or method may be configured by implementing operations or processing of information according to use of the computer 2200.

For example, in a case where communication is performed between the computer 2200 and an external device, the CPU 2212 may execute a communication program loaded in the RAM 2214 and instruct the communication interface 2222 to perform communication processing based on processing written in the communication program. Under the control of the CPU 2212, the communication interface 2222 reads transmission data stored in a transmission buffer processing area provided in a recording medium such as the RAM 2214, the hard disk drive 2224, the DVD-ROM 2201, or the IC card, transmits the read transmission data to the network, or writes reception data received from the network in a reception buffer processing area or the like provided on the recording medium.

In addition, the CPU 2212 may cause the RAM 2214 to read all or a necessary part of a file or database stored in an external recording medium such as the hard disk drive 2224, the DVD-ROM drive 2226 (DVD-ROM 2201), the IC card, or the like, and may execute various types of processing on data on the RAM 2214. Then, the CPU 2212 writes the processed data back in the external recording medium.

Various types of information such as various types of programs, data, tables, and databases may be stored in a recording medium and subjected to information processing. The CPU 2212 may execute, on the data read from the RAM 2214, various types of processing including various types of operations, information processing, conditional judgement, conditional branching, unconditional branching, information retrieval/replacement, or the like described throughout the present disclosure and specified by instruction sequences of the programs, and writes the results back to the RAM 2214. In addition, the CPU 2212 may retrieve information in a file, a database, or the like in the recording medium. For example, when a plurality of entries, each having an attribute value of a first attribute associated with an attribute value of a second attribute, are stored in the recording medium, the CPU 2212 may retrieve, out of the plurality of entries, an entry with the attribute value of the first attribute specified that meets a condition, read the attribute value of the second attribute stored in said entry, and thereby acquiring the attribute value of the second attribute associated with the first attribute meeting a predetermined condition.

The programs or software modules described above may be stored in a computer-readable medium on the computer 2200 or near the computer 2200. In addition, a recording medium such as a hard disk or a RAM provided in a server system connected to a dedicated communication network or the Internet can be used as a computer-readable medium, thereby providing a program to the computer 2200 via the network.

While the present invention has been described by way of the embodiments, the technical scope of the present invention is not limited to the above-described embodiments. It is apparent to persons skilled in the art that various alterations or improvements can be added to the above-described embodiments. It is also apparent from the described scope of the claims that the embodiments to which such alterations or improvements are added can be included in the technical scope of the present invention.

Note that the operations, procedures, steps, stages, or the like of each process performed by a device, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### REFERENCE SIGNS LIST

1 System.
2 Feeding Apparatus
3 Control Apparatus
21 Feed Discharge Apparatus
22 Apparatus
31 Image Acquisition Unit
32 Identification Unit
33 Model
34 Index Value Acquisition Unit
35 Storage Unit
36 Determination Unit
37 Control Unit
100 Concentrated Feed
101 Roughage
110 Feeding Position
111 Feed Intake Position
211 Moving Unit
212 Feed Discharge Unit
213 Imaging Unit
214 Arm
215 Rail
221 Moving Unit
222 Feed Pushing Unit
223 Imaging Unit
2200 Computer
2201 DVD-ROM
2210 Host Controller
2212 CPU
2214 RAM
2216 Graphics Controller
2218 Display Device
2220 Input/output Controller
2222 Communication Interface
2224 Hard Disk Drive
2226 DVD-ROM DRIVE
2230 ROM
2240 Input/output Chip
2242 Keyboard.

## Claims

1. An apparatus comprising:
an image acquisition unit that acquires an image of livestock;
an index value acquisition unit that acquires, based on the image, at least one state index value indicating a state of the livestock;
a determination unit that determines, based on the at least one state index value, feeding content for the livestock; and
a control unit that controls, in accordance with the feeding content, a feeding apparatus that feeds the livestock.

2. The apparatus according to claim 1, wherein
the feeding apparatus includes a feed discharge apparatus that discharges feed, and
the determination unit determines, based on the at least one state index value, a feeding amount by the feed discharge apparatus.

3. The apparatus according to claim 2, further comprising:
an identification unit that identifies, among a plurality of livestock collectively raised, livestock that is at a position to eat feed discharged by the feed discharge apparatus, wherein
the image acquisition unit acquires images of the respective ones of the plurality of livestock,
the index value acquisition unit acquires the at least one state index value for each livestock from an image of each livestock, and
the determination unit determines a feeding amount for livestock identified by the identification unit among the plurality of livestock.

4. The apparatus according to claim 2, wherein
the determination unit determines feeding amounts of roughage and concentrated feed, respectively.

5. The apparatus according to claim 4, wherein
the at least one state index value includes a body condition score BCS and a rumen fill score RFS, and
the determination unit decreases a feeding amount of concentrated feed in response to an average score BCS_{Ave/week} of BCS in one week, a rate of change ΔBCS_{Ave/week} of BCS_{Ave/week}, a first threshold BCS_{Th1} of BCS, an RFS at an arbitrary time, and a threshold RFS_{Th} of RFS satisfying BCS_{Ave/week}>BCS_{Th1} and ΔBCS_{Ave/week}>0 and RFS_{Th}<RFS.

6. The apparatus according to claim 4, wherein
the at least one state index value includes a body condition score BCS and a rumen fill score RFS, and
the determination unit decreases a feeding amount of concentrated feed and increases a feeding amount of roughage in response to an average score BCS_{Ave/week} of BCS in one week, a rate of change ΔBCS_{Ave/week} of BCS_{Ave/week}, a first threshold BCS_{Th1} of BCS, an RFS at an arbitrary time, and a threshold RFS_{Th} of RFS satisfying BCS_{Ave/week}>BCS_{Th1} and ΔBCS_{Ave/week}>0 and RFS_{Th}≥RFS.

7. The apparatus according to claim 4, wherein
the at least one state index value includes a body condition score BCS and a rumen fill score RFS, and
the determination unit increases a feeding amount of concentrated feed and decreases a feeding amount of roughage in response to an average score BCS_{Ave/week} of BCS in one week, a rate of change ΔBCS_{Ave/week} of BCS_{Ave/week}, a second threshold BCS_{Th2} of BCS, an RFS at an arbitrary time, and a threshold RFS_{Th} of RFS satisfying BCS_{Ave/week}<BCS_{Th2} and ΔBCS_{Ave/week}<0 and RFS_{Th}<RFS.

8. The apparatus according to claim 4, wherein
the at least one state index value includes a body condition score BCS and a rumen fill score RFS, and
the determination unit increases a feeding amount of roughage in response to an average score BCS_{Ave/week} of BCS in one week, a rate of change ΔBCS_{Ave/week} of BCS_{Ave/week}, a second threshold BCS_{Th2} of BCS, an RFS at an arbitrary time, and a threshold value RFS_{Th} of RFS satisfying BCS_{Ave/week}<BCS_{Th2} and ΔBCS_{Ave/week}<0 and RFS_{Th}≥RFS.

9. The apparatus according to claim 2, wherein
the feed discharge apparatus includes:
a feed discharge unit that discharges feed in a vicinity of a fence surrounding the livestock;
a moving unit that moves the feed discharge unit along the fence; and
an imaging unit that is moved integrally with the feed discharge unit by the moving unit and captures an image of livestock that is at a position to eat feed discharged by the feed discharge unit, and
the image acquisition unit acquires an image from the imaging unit.

10. The apparatus according to claim 1, wherein
the feeding apparatus includes a feed pushing apparatus that pushes leftover feed so as to bring the leftover feed closer to the livestock, and
the determination unit determines whether or not to execute feed pushing for the livestock based on at least some of the at least one state index value.

11. The apparatus according to claim 10, wherein
the at least one state index value includes a rumen fill score RFS, and
the determination unit determines to execute feed pushing for the livestock in response to RFS and a threshold RFS_{Th} of RFS satisfying RFS_{Th}>RFS.

12. The apparatus according to claim 10, further comprising:
an identification unit that identifies, among a plurality of livestock collectively raised, livestock that is at a position to eat feed pushed by the feed pushing apparatus, wherein
the image acquisition unit acquires images of the respective ones of the plurality of livestock,
the index value acquisition unit acquires the at least one state index value for each livestock from an image of each livestock, and
the determination unit determines whether or not to execute feed pushing for livestock identified by the identification unit among the plurality of livestock.

13. The apparatus according to claim 12, wherein
the at least one state index value includes a rumen fill score RFS, and
the determination unit determines to execute feed pushing for the livestock in response to the livestock identified by the identification unit indicating a minimum value RFS_{min/group} of RFS among the plurality of livestock and the RFS_{min/group} satisfying, with respect to a maximum value RFS_{max/group} of RFS among the plurality of livestock, RFS_{max/group}-RFS_{min/group}>1.

14. The apparatus according to claim 10, wherein
the feed pushing apparatus includes:
a feed pushing unit that pushes leftover feed so as to bring the leftover feed closer to a fence surrounding the livestock;
a moving unit that moves the feed pushing unit along the fence; and
an imaging unit that is moved integrally with the feed pushing unit by the moving unit and captures an image of livestock that is at a position where feed pushing is performed by the feed pushing unit, and
the image acquisition unit acquires an image from the imaging unit.

15. The apparatus according to claim 1, wherein
the index value acquisition unit acquires the at least one state index value by supplying an image acquired by the image acquisition unit to a model that outputs, in response to an image of livestock being input, the at least one state index value for livestock in the image.

16. A method comprising:
a step for acquiring an image of livestock;
a step for acquiring an index value by acquiring, based on the image, at least one state index value indicating a state of the livestock;
a step for determining, based on the at least one state index value, feeding content for the livestock; and
a step for controlling, in accordance with the feeding content, a feeding apparatus that feeds the livestock.

17. A program for causing a computer to function as:
an image acquisition unit that acquires an image of livestock;
an index value acquisition unit that acquires, based on the image, at least one state index value indicating a state of the livestock;
a determination unit that determines, based on the at least one state index value, feeding content for the livestock; and
a control unit that controls, in accordance with the feeding content, a feeding apparatus that feeds the livestock.
